# EUROPEAN PATENT SPECIFICATION

(11) **EP 3 219 475 B1**
(45) Date of publication and mention of the grant of the patent: **04.05.2022**
(21) Application number: 17160674.2
(22) Date of filing: 13.03.2017
(51) Int. Cl.: B29C 71/02, A42B 3/12, B29L 31/48, B29K 105/04, B29C 44/56

(54) **MOLDING METHOD**
FORMVERFAHREN
PROCÉDÉ DE MOULAGE

(30) Priority: 15.03.2016 IT UA20161692
(43) Date of publication of application: 20.09.2017
(73) Proprietor: Tryonic Ltd, London N3 1DP (GB)
(72) Inventor: Paronetto, Giuseppe, London, Greater London (GB); Del Guasta, Andrea, London, Greater London (GB)
(74) Representative: Citron, Massimiliano

(56) References cited:
- WO-A1-92/22420
- WO-A1-2012/140473

## Description

The invention relates to a method for stabilizing the size of an object that has been previously produced by hot molding a composite material. In particular the method is convenient for producing paddings, e.g. of helmets, or generally panels or pads to absorb shocks or lightening structures.

E.g. from WO2012140473 or EP0585965, a composite material is known that thanks to containing synthetic hollow microspheres can be advantageously used for many applications. EP0585965 uses it to lighten the final product, while WO2012140473 exploits its foaming characteristics during molding for better copying the mold cavity.

However, such material is not without drawbacks.

It turned out that during curing in the mold (at about 140 °C) unexpectedly a percentage of spheres in the material breaks down and releases the gas that they contained. The free gas is then trapped within the mass of the material when it cools down. If the molded object is subjected in use to high temperatures (70 - 80 °C) the gas expands much more than the material around, so that the object gets inflated "from the inside" until it deforms. This scenario is less unlikely than it sounds: think e.g. to the material forming the padding of a helmet that is left in the sun or is worn in the desert. If the material swells by only a few % in each direction, the helmet is unusable.

Several formulations of the material lead to different final porosities, and the more the material is porous, the more the gas can escape therefrom without consequences. However it has been observed that even in high-porosity materials, the phenomenon described above causes in the finished product undesired and little acceptable deformations.

It is clear that this phenomenon greatly limits the application field of the material or forces to accept a large number of post-molding waste.

The main object of the invention is to propose a method that mitigates or solves the problematic effects of the above-mentioned phenomenon. In particular, a method is presented for stabilizing the size of an object, previously produced by hot molding a composite material, with respect to volumetric changes due to the increase of the working temperature.

The composite material comprises, or consists of, expanded microspheres and unexpanded microspheres, the microspheres being made of plastic material, of closed shape, hollow and filled with gas.

The method involves the step of (i) heating again, after molding, an object molded with the material bringing it to a temperature which induces the internal residual gas (released from broken microspheres) to exit from the material. The phase (i) can also be run after a long time the object has been molded, not necessarily immediately after molding.

Preferably by phase (i) also a permanent volumetric expansion is induced in the material, due to the heating and expansion of the gas inside the spheres of the material. The volumetric expansion is e.g. avoidable by forcing the object to maintain unchanged shape during step (i), e.g. by performing the step (i) into a mold which allows passage of gas but opposes to the volumetric expansion of the object. The volumetric expansion may be used advantageously to compensate accidental deformations that would occur during the operational life of the object. For this purpose, the method preferably provides to determine or calculate the % of volumetric expansion that a molded object undergoes during phase (i) and to mold the object with such dimensions that, after the increase by such % due to phase (i), the object reaches the desired size.

Because after step (i) the object assumes stable dimensions even if it returns to temperatures comparable to those of step (i), the problem mentioned in the introduction has been solved. It is sufficient to mold the object a bit smaller than its nominal size, and then subject it to step (i) both to remove residual internal gas therefrom and to bring it to the desired size in a stable manner. How much smaller to mold the object depends on the % of volumetric expansion which characterizes its formulation. If, for example, with a certain formula the material expands by X% during step (i), to have a final desired size R it is sufficient that the size for the previously molded object is substantially R*100/(100 + X).

Preferably, the molded object is heated by bringing it to a temperature of 70-130 °C, even more preferably of 70-95 °C. These two temperature ranges advantageously stress little the material and they stabilize the dimensions thereof if it will be - in use - under the same operating conditions and temperature, which practically represent the natural upper bound for certain applications, like e.g. helmets. That is to say that a molded object, which is heated again after its molding for example at 90 °C and re-expands, will not re-expand anymore when it returns to 90 °C during use. The indicated temperatures are those of the environment in which the object is heated, and substantially coincide with the temperature that the object assumes.

Below as examples some practical results of padding for helmets subjected to the method of the invention. The paddings were molded with the indicated materials and subjected to step (i).

All paddings have then given good performances in use, or have not shown appreciable volumetric expansion even at high temperatures of use.

### EXAMPLE 1:

using the ExpanCell^{®} material of families 551 or 461, the range of the second post-molding heating can be comprised between 75-95 °C.

### EXAMPLE 2:

to avoid that the padding of a helmet could re-expand at 80 °C, the ExpanCell^{®} family with code 551 is chosen.

### EXAMPLE 3:

to avoid that the padding of a helmet could re-expand at 90 °C, choose the ExpanCell^{®} family with code 461.

The formula of the molded material is preferably that described in WO2012140473 and EP0585965. In general, each particle has two main components: a polymer shell (*Monomer*), and the gas inside it (*Blowing agent*)*.* Below is a summary table of these two elements used in the ExpanCell^{®} material of the previous examples; the legend explains the meaning of the acronyms.

| Grade | Monomers | Blowing agent |
|---|---|---|
| 551 | VDC, ACN, MMA | IB |
| 461 | VDC, ACN, MMA | IB |
| 930 | ACN, MAN, MMA | IB/IO |
| 909 | ACN, MAN, MMA | IP |
| 920-80 | ACN, MAN, MMA | IP |

| | |
|---|---|
| VDC = vinyl of chloride; | ACN = Acrylonitrile; |
| MMA = methyl meta acrylate; | MAN = methyl acrylonitrile; |
| IB = isobutane; | IP = isopentane; |
| IO = iso-octane. | |

The copolymer of type (*grade*) 551 and 461 is called OLY (acrylonitrile-co-vinylidene chloride-co-methyl methacrylate). The copolymer of 909/920/930 series is called 2-Propenoic acid, 2-methyl-, methyl ester, polymer with 2-methyl-2-propenenitrile and 2-propenenitrile.

Preferably the molded object is heated for a time of 1-2 hours. This duration has proven experimentally to be the acceptable level to achieve the described technical effects on the composite material and a manufacturing cycle of good time yield.

The temperature and/or the heating time depend however on the material's formulation, and can be adapted from time to time.

Preferably in step (i) the object is heated in an oven.

Preferably before step (i) the material that will constitute the object is molded by heating it at a temperature higher than that in step (i), e.g. 140-150 °C.

The composite material to be molded preferably comprises, or consists of, expanded particles and unexpanded particles, in particular 20-50% by weight of expanded particles and 80-50% of unexpanded particles.

The particles or microspheres are made of plastic material, of closed shape, hollow and gas filled. These values guarantee favorable performance and weight and suitable to applications, in particular, they give excellent results of impact absorption and lightness.

The expanded particles are essential for the invention, and serve as binder or filler for the other unexpanded particles. In fact, the expanded particles are the filling element (*filler*) and act as a binder preventing that the other expandable particles (not yet expanded), which are heavier, precipitate by gravity on the bottom of the mold and cluster. Instead thus the expanded particles keep the expanding particles suspended in all the material and in a uniform manner. That is why the presence of expanded and unexpanded microspheres ensures uniformity of the density of the whole piece thereby ensuring the uniformity of the mechanical performances.

The particles are generally spherical in shape and are very small (10-40 µm in diameter). Note, however, that the size is not essential.

An advantage of the material is that it gives the molded product shape memory. When the product undergoes a deformation, the expanded and non-expanded particles compress or expand within its mass. Thanks to the elasticity of the particles, when the stress ceases each microsphere goes back to its original state, and consequently the material regains the starting shape. Note also that the molded product reacts to a second deformation in the same way as to the first, with obvious safety advantages and repeatability of the response to a shock.

## Claims

1. Method for stabilizing the size of an object previously produced by hot-molding a composite material,
the composite material comprising expanded microspheres and unexpanded microspheres, the microspheres being made of plastic material, of closed shape, hollow and filled with gas;
comprising the step of
heating again the molded object bringing it at a temperature which induces internal residual gas to exit from the material.

2. Method according to claim 1, wherein the molded object is re-heated at a temperature of 70-130 °C.

3. Method according to claim 2, wherein the object is re-heated at a temperature of 70-95 °C.

4. Method according to any one of the preceding claims, wherein by said step in the material a permanent volumetric expansion is induced.

5. Method according to claim 4, wherein, calling X the percentage of permanent volumetric expansion, to have a final desired dimension for the object, called R, before said step the object is molded with such a dimension substantially equal to R*100/(100 + X).

6. Method according to any one of the preceding claims, wherein said step lasts for a time of 1-2 hours.

7. Method according to any one of the preceding claims, wherein in said step the object is heated inside an oven.

8. Method according to any one of the preceding claims, wherein said step is run immediately after molding the object.

9. Method according to any one of the preceding claims, wherein said step is performed into a mold which allows passage of gas but opposes to the volumetric expansion of the object.

10. Method according to any one of the preceding claims, wherein before said step the material that constitutes the object is molded by heating it at a temperature higher than that in said step, e.g. 140-150 °C.

11. Method according to any one of the preceding claims, wherein the object is a padding.

12. Method according to claim 11, **characterized in that** the padding is a padding of a helmet.

## Patentansprüche

1. Verfahren zur Stabilisierung der Größe eines Gegenstandes, der zuvor durch Heißverformung eines Verbundmaterials hergestellt wurde, wobei
das Verbundmaterial besteht aus expandierten Mikrokugeln und nicht expandierten Mikrokugeln, wobei die Mikrokugeln aus Kunststoff bestehen, eine geschlossene Form haben, hohl und mit Gas gefüllt sind;
umfassend den Schritt erneutes Erhitzen des geformten Gegenstands, um ihn auf eine Temperatur zu bringen, die das Austreten von internen Restgasen aus dem Material bewirkt.

2. Verfahren nach Anspruch 1, wobei der geformte Gegenstand bei einer Temperatur von 70-130 °C erneut erhitzt wird.

3. Verfahren nach Anspruch 2, wobei der Gegenstand bei einer Temperatur von 70-95 °C erneut erhitzt wird.

4. Verfahren nach einem der vorhergehenden Ansprüche, wobei durch besagten Schritt in dem Material eine permanente volumetrische Ausdehnung induziert wird.

5. Verfahren nach Anspruch 4, **dadurch gekennzeichnet, dass** man X als Prozentsatz der permanenten volumetrischen Ausdehnung bezeichnet, um eine gewünschte Endabmessung des Gegenstands, genannt R, zu erhalten, und dass man vor sagte Schritt den Gegenstand mit einer solchen Abmessung formt, die im Wesentlichen gleich R*100/(100 + X) ist.

6. Verfahren nach einem der vorhergehenden Ansprüche, wobei sagte Schritt eine Zeitspanne von 1 bis 2 Stunden umfasst.

7. Verfahren nach einem der vorhergehenden Ansprüche, wobei in der besagten Schritt der Gegenstand in einem Ofen erhitzt wird.

8. Verfahren nach einem der vorhergehenden Ansprüche, wobei der besagte Schritt unmittelbar nach dem Formen des Objekts durchgeführt wird.

9. Verfahren nach einem der vorhergehenden Ansprüche, wobei der besagte Schritt in einer Form durchgeführt wird, die den Durchgang von Gas erlaubt, aber der volumetrischen Ausdehnung des Objekts entgegenwirkt.

10. Verfahren nach einem der vorhergehenden Ansprüche, wobei vor dem besagten Schritt das Material, aus dem der Gegenstand besteht, durch Erhitzen auf eine höhere Temperatur als in der besagte Schritt z. B. 140-150 °C, geformt wird.

11. Verfahren nach einem der vorhergehenden Ansprüche, wobei der Gegenstand eine Polsterung ist.

12. Verfahren nach Anspruch 11, **dadurch gekennzeichnet, dass** die Polsterung eine Polsterung eines Helms ist.

## Revendications

1. Procédé de stabilisation de la taille d'un objet préalablement produit par moulage à chaud d'un matériau composite,
le matériau composite comprenant des microsphères expansées et des microsphères non expansées, les microsphères étant en matière plastique, de forme fermée, creuses et remplies de gaz ;
comprenant l'étape consistant à chauffer à nouveau l'objet moulé en le portant à une température qui induit la sortie du gaz résiduel interne du matériau.

2. Procédé selon la revendication 1, dans lequel l'objet moulé est réchauffé à une température de 70-130 °C.

3. Procédé selon la revendication 2, dans lequel l'objet est réchauffé à une température de 70-95 °C.

4. Procédé selon l'une quelconque des revendications précédentes, dans lequel on induit par ladite étape dans le matériau une expansion volumétrique permanente.

5. Procédé selon la revendication 4, dans lequel, en appelant X le pourcentage d'expansion volumétrique permanente, pour avoir une dimension finale souhaitée pour l'objet, appelée R, avant ladite étape, l'objet est moulé avec une telle dimension sensiblement égale à R*100/(100 + X).

6. Procédé selon l'une quelconque des revendications précédentes, dans lequel l'étape dite dure un temps de 1 à 2 heures.

7. Procédé selon l'une quelconque des revendications précédentes, dans lequel dans ladite étape, l'objet est chauffé à l'intérieur d'un four.

8. Procédé selon l'une quelconque des revendications précédentes, dans lequel ladite étape est exécutée immédiatement après le moulage de l'objet.

9. Procédé selon l'une quelconque des revendications précédentes, dans lequel ladite étape est réalisée dans un moule qui permet le passage du gaz mais s'oppose à l'expansion volumétrique de l'objet.

10. Procédé selon l'une quelconque des revendications précédentes, dans lequel, avant ladite étape, le matériau qui constitue l'objet est moulé en le chauffant à une température supérieure à celle de ladite étape, par exemple 140-150 °C.

11. Procédé selon l'une quelconque des revendications précédentes, dans lequel l'objet est un rembourrage.

12. Procédé selon la revendication 11, **caractérisé en ce que** le rembourrage est un rembourrage d'un casque.
